# EUROPEAN PATENT SPECIFICATION

(11) **EP 0 454 978 B1**
(45) Date of publication and mention of the grant of the patent: **15.06.1994**
(21) Application number: 91104075.6
(22) Date of filing: 15.03.1991
(51) Int. Cl.: B60K 15/03, B29C 67/14, B29C 67/18, B29C 33/00

(54) **Plastic fuel tank and method for molding the same**
Kraftstoffbehälter aus Kunststoff und sein Formgebungsverfahren
Réservoir pour carburant en matériau thermoplastique et procédé pour son moulage

(30) Priority: 02.05.1990 US 517936
(43) Date of publication of application: 06.11.1991
(73) Proprietor: THE BUDD COMPANY, Troy, MI 48084 (US)
(72) Inventor: Freeman, Richard Benjamin, Oxford, Michigan 48015 (US); Greve, Bruce Norman, Davisburg, Michigan 48019 (US)
(74) Representative: Finck, Dieter, Dr.Ing.

(56) References cited:
- EP-A- 0 363 744
- DE-A- 2 340 257
- DE-A- 2 537 144
- DE-A- 2 719 449
- DE-A- 2 913 471
- DE-U- 8 704 982
- FR-A- 2 160 162
- US-A- 3 330 439
- US-A- 3 552 599
- US-A- 4 660 738

## Description

This invention relates to a method of molding a one-piece plastic fuel tank.

The desire for a fuel efficient and durable vehicle that satisfies the requirements of today's sophisticated consumer has placed difficult demands on modern fuel tank design. Plastic fuel tanks are gaining notoriety for meeting these demands. One such demand is the desire to reduce overall vehicle mass. The use of a lightweight plastic fuel tank, rather than a conventional metal fuel tank, helps achieve the goal of reduced vehicle mass.

Another demand on today's vehicle design is roominess in the passenger compartment. Increasing the roominess of the passenger compartment, without increasing the overall size of the vehicle, results in a cramped engine compartment and under carriage. This cramping of the under carriage conflicts with the consumer's desire to have a larger gas tank and thereby have longer range between fill-ups. To accommodate an optimal design of maximum tank volume in a minimum of available under carriage space, the fuel tank design required for a given vehicle may be one of irregular shape. Conventional metal gas tanks, generally being produced by a stamping operation, typically cannot easily meet these irregular shape requirements.

Another common characteristic of a cramped under carriage is the gas tank being in close proximity to an exhaust system. Conventional metal gas tank walls do not provide insulation from these types of local heat sources.

Safety and crash worthiness is also an important factor in the design of modern vehicles. Conventional metal gas tanks usually consist of two diametrically opposed stamped shells that attach to one another. This attachment results in a seam that extends around the circumference of the gas tank. A second seam may also be created where a filler neck attaches to the gas tank wall. These seams are potential sources of failure.

Plastic fuel tanks are known in the patent literature as, for example, in U.S. -A- 4,660,738 ; 4,625,980 4,602,722; 4,518,091 ; 4,482,075 ; 4,453,564 ; 4,416,303 3,595,422 ; 3,552,599 and 3,470,907. However, while each of these designs may have purported advantages over their metal counterparts, substantial improvements to the art remain to be made.

DE 27 19 449 A1 describes a sheet metal tank provided on its outside with a seamless coating of an elastic plastic material layer absorbing impact energy. On this elastic layer, an outer layer is coated consisting of a tough, break-proof glass fiber-reinforced plastic material.

For forming a hollow fiber-reinforced part, particularly for making a one-piece plastic vehicle body closure such as a door, a lift gate, a deck lid and a hood, EP-A-0 363 744 discloses providing a thin-walled support of sufficient rigidity to substantially maintain its shape when unloaded; attaching a plurality of preforms of fibrous pieces to the support to form a subassembly; placing the subassembly in a mold; closing the mold; impregnating the fibrous pieces with resin; curing the resin to form a hollow part; opening the mold; and removing the part from the mold. This method further comprises pressurizing the support while applying the preforms thereto; depressurizing the support before the mold is closed; and repressurizing the support prior to impregnating the preforms with resin.

It is the object of the invention to provide a method for molding a one-piece plastic fuel tank which is corrosion-resistant with regard to fuel and which continues to contain fuel if damaged on its outside.

According to the invention the method of producing molding a one piece plastic fuel tank utilizes a resin transfer molding technique where resin is injected into fibrous reinforcement material. During this process, fibrous material is placed on a thin-walled liner that generally conforms to the interior shape of the mold. The liner is then placed into the mold and serves as a support for the fibrous material that covers it. As resin is injected into the mold, the fibrous material between the exterior surface of the liner and the interior surface of the mold is impregnated. The liner supports this impregnated material thereby defining a hollow tank interior. Since the liner is made of a material resistant to fuel corrosion the liner, which remains after the resin has cured, acts as a protective interior surface for the resin tank walls,. In addition, the liner serves as a type of flexible bag or pouch that continues to contain fuel, even if the outer shell is damaged.

In accordance with a feature of this invention, the fibrous material is also arranged to provide an integral filler neck that avoids the need for a connection seam at the top surface of the tank. Elimination of this seam, along with the elimination of a circumferential seam inherent in conventional two piece metal gas tanks, provides further enhanced structural integrity for the tank.

In the preferred embodiment, the fibrous material is also arranged in layers at desired locations to allow for the placement of insulative material between the layers. When resin is subsequently injected into the mold and the layers of fibrous material are impregnated, the insulative material is sandwiched between the fibrous layers within the tank wall. This insulative material serves to insulate selected areas of the tank from disfavorable exterior environments. In the preferred embodiment, the insulative material shields the interior of the tank from heat generated by the exhaust system.

Pursuant to the present invention a molded one piece plastic fuel tank is provided with a hollow interior liner having generally thin airtight walls. The exterior of the liner is covered by resin impregnated fibrous material. The liner advantageously serves the purposes of defining the hollow interior of the tank during molding, protecting the plastic shell from corrosive fuels, as well as providing a secondary fuel containment means for enhanced occupant safety in the event of impact. Further embodiments of the invention are described in the attached claims.

The various advantages of the present invention will become apparent to one skilled in the art after reading the following specification and by reference to the drawings in which:
Fig. 1 is a cross sectional view illustrating a molded tank in accordance with the teachings of the present invention;
Fig. 2 is a partial cross sectional view of the tank wall near the exhaust system, along area "2" in Fig. 1, illustrating the insulative material disposed between layers of fibrous material;
Fig. 3 is a flowchart describing the steps involved in the preferred method for molding the fuel tank;
Fig. 4 is an exploded, perspective view of an insulative material being placed between layers of fibrous material and subsequently being placed on the liner; and
Fig. 5 is a cross sectional view of the mold illustrating the resin being injected into the fibrous material which is supported by the liner.

It should be understood from the outset that while this invention will be described in connection with a particular example, that the scope of the invention need not be so limited since those skilled in the art will appreciate that its teachings can be used in a much wider variety of applications involving automotive fuel tanks and other applications where the containment of a material is desired. With this caveat in mind the present invention will be described in connection with molding a one piece plastic fuel tank 10.

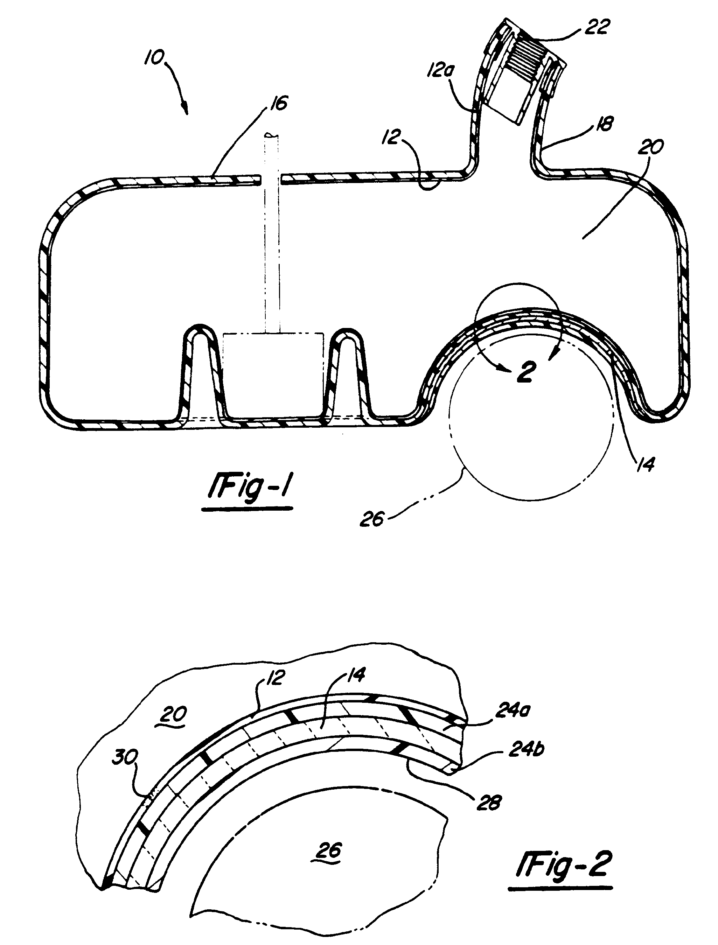

Figure 1 illustrates a cross-section of the preferred embodiment for this tank 10. The tank 10 incorporates an interior liner 12, and an insulative material 14 that is disposed completely within a tank wall 16. The tank 10 also incorporates a conduit 18 defining a passage leading from an interior portion 20 of the tank 10 to a location away from the upper surface of the tank thereby providing a filler neck for the tank. The end of the filler neck conduit can be covered, if desired, by a more conventional metallic insert 22 for receiving a typical fuel tank threaded cap (not shown).

Fig. 1 also illustrates the construction of the tank wall 16. Generally, the wall 16 is defined by the interior liner 12 and a resin impregnated fibrous material 24. The impregnated fibrous material 24 forms the bulk of the tank wall 16, while the liner 12 covers the interior surface of the impregnated fibrous material 24. The tank wall 16 near an exhaust system 26 includes the interior liner 12 and impregnated fibrous material 24, as well as the insulative material 14. The insulative material 14 can be made of a phenolic foam, mineral batting material or other suitable material. Insulative material 14 is completely disposed within the tank wall 16 between inner and outer layers, 24a and 24b, of impregnated fibrous material. The insulative material 14 acts as a heat shield, as it insulates the interior 20 of the tank 10 from heat generated by the exhaust system 26.

Fig. 2 is an expanded view of the tank wall 16 near the exhaust system 26. Here, the layered construction of the tank wall 16 is clearly evident. Starting from the tank interior 20, the layered construction is shown as follows: the most interior layer is the liner 12; the next layer is resin impregnated fibrous material 24a; then the layer of insulative material 14; and finally another layer 24b of resin impregnated fibrous material. This final layer of impregnated fibrous material 24b defines the exterior tank surface 28. Also shown in Fig. 2 is the exhaust system 26 in close proximity to this exterior tank surface 28.

Fig. 1 also depicts a conduit 18 leading from the tank interior 20. The metallic filler neck insert 22 can be attached to the distal end of the conduit 18. Since the conduit 18 is incorporated into the one piece design of the tank 10, there is no seam at the tank wall 16. Rather, the conduit 18 extends from the tank 10 as a continuous extension of the tank wall 16. Therefore, a seam where a filler neck would normally attach to the tank wall is avoided, and the structural integrity of the tank is enhanced.

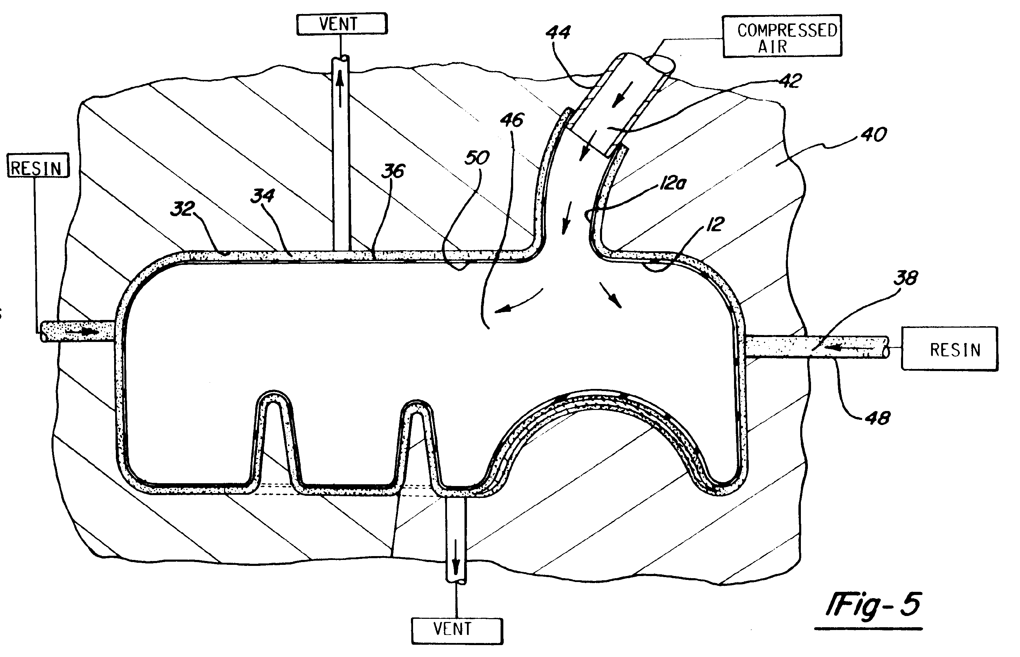

Fig. 3 is a flowchart that depicts the preferred steps involved in the process of molding the one piece plastic fuel tank 10. The first step is to create the interior liner 12. This liner 12 should generally be thin walled, airtight, fuel impervious and conform to an interior mold surface 32 as shown in Fig. 5. In the preferred embodiment, the liner 12 is made from a corrosion resistant material 30 such as polyethylene or polypropylene. This material 30 is impermeable and able to withstand prolonged exposure to methyl and ethyl alcohol, and gasoline blends which could otherwise degrade the plastic tank wall 16 depending on the type of resin system employed. As will be seen, the liner 12 is required to be airtight since compressed air is pumped into the liner 12 during the molding process. The liner 12 can be made in many ways such as blow molding, rotational molding or twin sheet thermoforming.

The next step on the flowchart is to attach fibrous material preforms 34 to the liner 12. The preforms consist of irregularly shaped shells of multiple fibers which are generally held in shape by a suitable binder. The preforms are preferably made by a process described in commonly assigned U.S. Serial No. 2872-00188, filed April 24, 1990, entitled "Method and Apparatus For Forming Fiber Reinforced Plastic Preforms From A Wet Slurry" by Freeman et al which is hereby incorporated by reference. Attaching these preforms involves suitably adhering the fibrous material preforms 34 on the exterior liner surface 36. Note, when the fibrous preforms 34 are placed on the exterior liner surface 36, the fibers may be selectively oriented to achieve maximum structural integrity.

In the preferred embodiment, the liner 12 has a tubular extension 12a that extends outwardly from the exterior surface 36 of the liner 12. This tubular extension 12a corresponds to the location of the conduit 18 leading from the tank interior 20. The fibrous material preforms 34 may themselves include extensions which conform to lever extension 12a or additional fibrous material may be wrapped around the tubular extension 12a of the liner 12. When this fibrous material is subsequently impregnated, the conduit 18 leading from the tank interior 20 is formed.

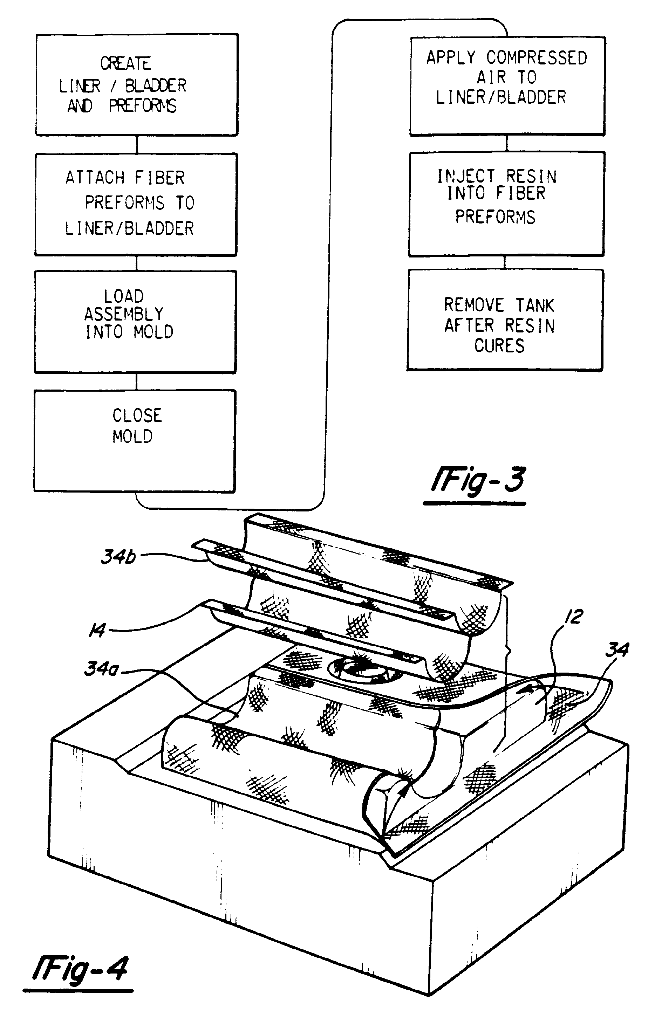

As discussed previously, insulative material 14 may be placed between layers of the fibrous material. As shown in Fig. 4, this process comprises layering the fibrous material preforms 34a and 34b on the liner 12, and placing insulative material 14 between these layers of fibrous material. When the fibrous material is impregnated, the insulative material 14 is completely surrounded and disposed within the impregnated fibrous material 24.

The next step in the process is to load the covered liner assembly into the mold 40. This entails placing the liner 12, covered with fibrous material, into the mold 40 and closing the mold 40. The covered liner 12 should substantially conform to the shape of the interior mold surface 32. Thus, the fibrous material 34 is supported by liner 12 in the gap between the exterior liner surface 36 and the interior mold surface 32.

The next step is to apply compressed air 42 to the liner 12. A source of compressed air 42 is connected to the conduit 18 via a suitable conduit 44 extending through the mold 40. By applying compressed air 42 to the interior liner cavity 46, via the conduit 18, the liner 12 becomes difficult to collapse. This allows the liner 12 to maintain its shape, and prevents the liner 12 from collapsing, when the resin 38 is injected.

The next step in the molding process is to inject a suitable resin 38 such as an epoxy or phenolic resin into the mold 40 as shown in Fig. 5. The resin 38 is injected into the mold 40 via a suitable conduit 48. This resin 38 impregnates the fibrous material that lies between the exterior liner surface 36 and the interior mold surface 32. As the resin 38 is injected, and impregnates the fibrous material, the compressed air 42 supports the liner 12 and keeps it from collapsing. While the resin 38 cures, the liner 12 also supports the resin impregnated material 24 and defines the interior tank surface 50.

The next step in the molding process is to open the mold 40 and remove the tank 10 after the resin 38 has cured. Once the resin 38 has cured, the completed tank 10 is removed from the mold 40 and the compressed air source is disconnected from the conduit 18. A metallic filler neck insert 22 may then be attached to the tank 10 immediately or during the assembly of the vehicle. Alternatively, the metal insert could be molded in place during the above-described molding process.

As discussed previously, the liner 12 remains in the tank 10 and acts as a protective surface for the tank walls made of the cured resin impregnated fibrous material 24 since the liner 12 is made of a corrosion resistant material. Liner 12 also serves as a "back-up" or secondary container for the fuel which would tend to continue to hold fuel even if the outer plastic shell should become damaged.

## Claims

1. A method of molding a one-piece plastic fuel tank (10) by covering an exterior surface (36) of a generally thin-walled hollow airtight support (12) with a fibrous material (34), placing the covered support (12) into a mold (40), applying pressure to the interior (46) of the support (12), injecting resin (38) between an interior surface (32) of the mold (40) and the exterior support surface (36) thereby impregnating the fibrous material pieces (34), utilizing the pressurized support (12) to prevent the collapse of the impregnated fibrous material pieces (24), curing the resin (38), opening the mold (40), removing the tank (10) from the mold (40), wherein said step of covering an exterior surface (36) of a support (12) and placing the support (12) into a mold (40) involves utilizing a fuel-impervious liner as a support (12) for defining an interior hollow portion (46) of the tank (10), said support also providing a fuel resistant liner for the molded tank (10).

2. A method according to claim 1 which further comprises placing a member (14) made of a material having selected characteristics between overlapping layers (34a, 34b) of the fibrous material (34), thereby facilitating desirous structural and performance characteristics.

3. A method according to claim 2 wherein the member (14) is at least partially disposed within a wall (16) of the tank (10).

4. A method according to one of the claims 1 to 3 which further comprises arranging the fibrous material around a tubular extension (12a) that extends outwardly from the exterior surface (16) of the liner (12) to form at least one integrally molded conduit (18) leading from the interior (46) of the tank (10) and serving as at least a portion of a filler neck for the tank (10).

5. A molded plastic fuel tank (10) made by injecting resin into fibrous material within a mold, said fuel tank (10) having a hollow one-piece airtight and fuel-impervious liner (12), the exterior (36) of said liner (12) being covered by a resin impregnated fibrous material (24), said liner (12) being molded to provide structural rigidity and self-supporting characteristics, said resin impregnated fibrous material (24) forming a substantially seamless exterior shell (16) directly in contact with the exterior (36) of said liner (12), said exterior shell (16) serving as a primary container for holding fuel, and said liner (12) being made of a material which is different than the resin impregnated material (24) and having a sufficient structural integrity to provide a temporary support for the fibrous material (34) in the mold when the resin (38) is injected, and to serve as a secondary container for holding the fuel if the outer shell (16) would become damaged.

6. The plastic fuel tank according to claim 5 which further comprises an insulating member (14) located between layers (34a, 34b) of the resin impregnated fibrous material (34).

7. The plastic fuel tank according to claim 6 wherein said insulating member (14) is at least partially disposed within a wall (16) of the tank (10).

8. The plastic fuel tank according to one of the claims 5 to 7 wherein said fibrous material (34) is arranged around a tubular extension (12a) that extends outwardly from the exterior surface (16) of the liner (12) to form at least one integrally molded conduit (18) leading from the interior (46) of the tank (10).

## Patentansprüche

1. Verfahren zum Ausformen eines einstückigen Tanks aus Kunststoff für Kraftstoff, bei welchem eine Außenfläche (36) eines insgesamt dünnwandigen, hohlen, luftdichten Trägers (12) mit einem Fasermaterial (34) beschichtet, der beschichtete Träger (12) in eine Form (40) eingesetzt, Druck auf den Innenraum (46) des Trägers (12) ausgeübt, Harz (38) zwischen eine Innenfläche (32) der Form (40) und der Träger-Außenfläche (36) eingespritzt, wodurch die Fasermaterialteile (34) imprägniert werden, wobei der mit Druck beaufschlagte Träger (12) dazu verwendet wird, das Kollabieren der imprägnierten Fasermaterialteile (24) zu verhindern, das Harz (38) ausgehärtet, die Form (40) geöffnet, und der Tank (10) aus der Form (40) entfernt wird, wobei der Schritt der Beschichtung einer Außenfläche (36) eines Trägers (12) und des Einsetzens des Trägers (12) in eine Form (40) die Verwendung einer für Kraftstoff undurchlässigen Einlage als Träger (12) umfaßt, um einen inneren hohlen Abschnitt (46) des Tanks (10) zu bilden, wobei der Träger für den ausgeformten Tank (10) darüber hinaus eine gegen Kraftstoff beständige Einlage bildet.

2. Verfahren nach Anspruch 1, welches außerdem das Einsetzen eines Elements (14) aus einem Material mit ausgewählten Eigenschaften zwischen überlappende Schichten (34a, 34b) des Fasermaterials (34) umfaßt, wodurch erwünschte bauliche und funktionelle Eigenschaften ermöglicht werden.

3. Verfahren nach Anspruch 2, bei dem das Element (14) wenigstens zum Teil in einer Wand (16) des Tanks (10) angeordnet ist.

4. Verfahren nach einem der Ansprüche 1 bis 3, welches weiterhin das Anordnen des Fasermaterials um einen rohrförmigen Fortsatz (12a) herum umfaßt, der sich von der Außenfläche (16) der Einlage (12) nach außen erstreckt, um wenigstens eine einstückig ausgeformte Leitung (18) zu bilden, die sich von dem Innenraum (46) des Tanks (10) aus erstreckt und als wenigstens ein Abschnitt eines Tankeinfüllstutzens für den Tank (10) dient.

5. Ausgeformter Tank (10) aus Kunststoff für Kraftstoff, der hergestellt wird, indem Harz in Fasermaterial in einer Form eingespritzt wird, wobei der Tank (10) für den Kraftstoff eine hohle, einstückig ausgebildete, luftdichte und für Kraftstoff undurchlässige Einlage (12) hat, das Äußere (36) der Einlage (12) mit einem mit Harz imprägnierten Fasermaterial (24) beschichtet ist, die Einlage (12) ausgeformt ist, um eine strukturelle Steifigkeit und selbsttragende Eigenschaften bereitzustellen, das mit Harz imprägnierte Fasermaterial (24) eine im wesentlichen nahtlose äußere Hülle (16) in direktem Kontakt mit dem Äußeren (36) der Einlage (12) bildet, die äußere Hülle (16) als ein erster Behälter zur Aufnahme des Kraftstoffs dient, und die Einlage (12) aus einem Material besteht, das sich von dem mit Harz imprägnierten Material (24) unterscheidet und eine ausreichende strukturelle Unversehrtheit hat, um einen temporären Träger für das Fasermaterial (34) in der Form zu bilden, wenn das Harz (38) eingespritzt wird, und um als ein zweiter Behälter zum Halten des Kraftstoffs zu dienen, wenn die äußere Hülle (16) beschädigt würde.

6. Tank aus Kunststoff für Kraftstoff nach Anspruch 5, der weiterhin ein isolierendes Element (14) aufweist, das zwischen Schichten (34a, 34b) des mit Harz imprägnierten Fasermaterials (34) angeordnet ist.

7. Tank aus Kunststoff für Kraftstoff nach Anspruch 6, bei dem das isolierende Element (14) wenigstens zum Teil in einer Wand (16) des Tanks (10) angeordnet ist.

8. Tank aus Kunststoff für Kraftstoff nach einem der Ansprüche 5 bis 7, bei dem das Fasermaterial (34) um einen rohrförmigen Fortsatz (12a) herum angeordnet ist, der sich von der Außenfläche (16) der Einlage (12) nach außen erstreckt, um wenigstens eine einstückig geformte Leitung (18) zu bilden, die von dem Innenraum (46) des Tanks (10) ausgeht.

## Revendications

1. Procédé de moulage d'un réservoir monobloc (10) en matière plastique pour carburant, par recouvrement d'une surface extérieure (36) d'un support hermétique creux (12), dont la cloison est globalement mince, par une matière fibreuse (34), mise en place du support recouvert (12) dans un moule (40), exercice d'une pression à l'intérieur (46) du support (12), injection d'une résine (38) entre une surface intérieure (32) du moule (40) et la surface extérieure (36) du support de façon à imprégner les pièces de matière fibreuse (34), utilisation du support comprimé (12) pour empêcher la déformation des pièces (24) de matière fibreuse imprégnée, polymérisation de la résine (38), ouverture du moule (40), enlèvement du réservoir (10) du moule (40), procédé suivant lequel ladite étape de recouvrement d'une surface extérieure (36) d'un support (12) et de mise en place du support (12) dans un moule (40) implique l'utilisation d'une chemise imperméable au carburant en tant que support (12) pour constituer une partie intérieure creuse (46) du réservoir (10), ledit support constituant aussi une chemise résistant au carburant pour le réservoir moulé (10).

2. Procédé selon la revendication 1, comprenant par ailleurs la mise en place d'un élément (14) réalisé en une matière ayant des caractéristiques choisies entre des couches (34a, 34b) de la matière fibreuse (34) qui se chevauchent afin d'améliorer des caractéristiques souhaitées de structure et de comportement.

3. Procédé selon la revendication 2, suivant lequel l'élément (14) est au moins partiellement disposé dans une cloison (16) du réservoir (10).

4. Procédé selon l'une des revendications 1 à 3, comprenant par ailleurs l'agencement de la matière fibreuse autour d'un prolongement tubulaire (12a) qui est saillant sur la surface extérieure (16) de la chemise (12) afin de former au moins un conduit moulé monobloc (18) partant de l'intérieur (46) du réservoir (10) et servant au moins d'une partie d'un col de remplissage du réservoir (10).

5. Réservoir moulé en matière plastique (10) pour carburant, qui est réalisé par injection d'une résine dans une matière fibreuse à l'intérieur d'un moule, ledit réservoir de carburant (10) comprenant une chemise creuse (12) qui est monobloc, hermétique et imperméable au carburant, l'extérieur (36) de ladite chemise (12) étant recouvert d'une matière fibreuse (24) imprégnée de résine, ladite chemise (12) étant moulée de manière qu'elle présente des caractéristiques auto-porteuses et de rigidité structurelle, ladite matière fibreuse (24) imprégnée de résine formant une coque extérieure (16), sensiblement sans joint, qui est directement en contact avec l'extérieur (36) de ladite chemise (12), ladite coque extérieure (16) servant de réservoir primaire pour contenir du carburant et ladite chemise (12) étant réalisée en une matière qui est différente de la matière (24) imprégnée de résine et qui a une cohésion structurelle suffisante pour assurer un support temporaire de la matière fibreuse (34) dans le moule lorsque la résine (38) est injectée et pour servir de réservoir secondaire pour contenir le carburant si la coque extérieure (16) devait être endommagée.

6. Réservoir en matière plastique pour carburant selon la revendication 5, comprenant par ailleurs un élément isolant (14) placé entre des couches (34a, 34b) de la matière fibreuse (34) imprégnée de résine.

7. Réservoir en matière plastique pour carburant selon la revendication 6, dans lequel ledit élément isolant (14) est au moins partiellement disposé dans une cloison (16) du réservoir (10).

8. Réservoir en matière plastique pour carburant selon l'une des revendications 5 à 7, dans lequel ladite matière fibreuse (34) est disposée autour d'un prolongement tubulaire (12a) qui est saillant sur la surface extérieure (16) de la chemise (12) afin de former au moins un conduit moulé monobloc (18) partant de l'intérieur (46) du réservoir (10).
